# FASCICULE DE BREVET EUROPEEN

(11) **EP 1 303 761 B1**
(45) Date de publication et mention de la délivrance du brevet: **19.11.2008**
(21) Numéro de dépôt: 01945409.9
(22) Date de dépôt: 13.06.2001
(51) Int. Cl.: G01N 35/02, G01N 1/00, B04B 5/04

(54) **APPAREIL POUR L'ANALYSE D'ECHANTILLONS**
VORRICHTUNG ZUR ANALYSE VON PROBEN
SAMPLE ANALYSIS APPARATUS

(30) Priorité: 16.06.2000 FR 0007670
(43) Date de publication de la demande: 23.04.2003
(73) Titulaire: Diagyr, 34830 Clapiers (FR)
(72) Inventeur: ESCAL, Philippe, 34170 Castelnau-le-Nez (FR)
(74) Mandataire: Laget, Jean-Loup
(86) Numéro de dépôt international: PCT/FR2001/001823
(87) Numéro de publication internationale: WO 2001/096881

(56) Documents cités:
- US-A- 4 708 940
- US-A- 4 713 974
- US-A- 5 166 889

## Description

La présente invention concerne un appareil pour l'analyse d'échantillons liquides conditionnés dans des tubes à échantillon fermés par un bouchon transperçable.

De tels appareils sont couramment utilisés notamment dans les domaines de la chimie, de la biochimie ou de la biologie pour analyser divers liquides par diverses techniques d'analyse, comme par exemple la chromatographie liquide. Par exemple, ces appareils sont utilisés par des laboratoires d'analyses médicales pour analyser le sang ou d'autres liquides d'origine humaine ou animale.

La demande de brevet internationale WO90/03834 décrit un appareil automatique pour le traitement et l'analyse du sérum du sang comportant un premier support en forme de râtelier destiné à recevoir des éprouvettes ou tubes à essai fermés par un bouchon transperçable et contenant des échantillons de sang et un gel séparateur, une unité de centrifugation capable de recevoir plusieurs éprouvettes pour soumettre leur contenu à une centrifugation, une unité de détection optique destinée à recevoir individuellement les éprouvettes qui ont été soumises à la centrifugation, et à engendrer des signaux de sortie indiquant si la centrifugation a été correctement effectuée et indiquant la position de la couche de gel séparateur entre le sérum et les cellules rouges du sang, et un ordinateur qui analyse les signaux de sortie de l'unité de détection optique. L'appareil décrit dans ce document comporte en outre une unité de prélèvement et de distribution, comportant une aiguille creuse qui peut être déplacée verticalement vers le bas pour perforer le bouchon d'une éprouvette placée dans l'unité de détection optique, afin de prélever un échantillon de sérum dans cette éprouvette. L'appareil comporte en outre un deuxième support en forme de râtelier, qui supporte des cuvettes vides destinées à recevoir les échantillons de sérum prélevés dans les éprouvettes amenées individuellement à l'unité de détection optique, un troisième support en forme de râtelier, destiné à recevoir les éprouvettes centrifugées que l'unité de détection optique a détecté comme étant défectueuses, un quatrième support en forme de râtelier, destiné à recevoir les éprouvettes et les cuvettes contenant les échantillons de sérum prélevés respectivement dans les éprouvettes, chaque cuvette surmontant l'éprouvette associée, et un bras de robot apte à saisir les éprouvettes une par une dans le premier support, pour les transférer dans l'unité de centrifugation et de là, une par une, dans l'unité de détection optique. Si cette dernière révèle un résultat non satisfaisant de la centrifugation, le bras de robot enlève l'éprouvette défectueuse et va la placer dans le troisième râtelier, puis il va chercher une nouvelle éprouvette dans l'unité de centrifugation pour la placer dans l'unité de détection optique. Par contre, si l'unité de détection optique révèle que l'éprouvette qui s'y trouve a subi une centrifugation correcte, l'aiguille de l'unité de prélèvement et de distribution est abaissée pour perforer le bouchon de l'éprouvette et son extrémité inférieure est plongée dans le sérum jusqu'à un niveau situé au dessus de la couche de gel séparateur, en fonction de la position de cette couche détectée par l'unité de détection optique. L'unité de prélèvement et de distribution prélève alors un échantillon de sérum dans l'éprouvette, puis l'aiguille creuse est extraite de cette dernière. Le robot va alors chercher dans le deuxième support une cuvette vide et l'amène au dessous de l'aiguille creuse. L'unité de prélèvement et de distribution délivre alors l'échantillon de sérum prélevé dans la cuvette vide, puis le robot place la cuvette remplie de l'échantillon de sérum sur le bouchon de l'éprouvette qui se trouve à cet instant dans l'unité de détection optique. Enfin, l'éprouvette et la cuvette associées sont transférées par le robot depuis l'unité de détection optique jusqu'au quatrième support. Les opérations décrites ci-dessus sont répétées successivement pour chacune des éprouvettes contenues dans l'unité de centrifugation.

L'appareil connu brièvement décrit ci-dessus est relativement compliqué et volumineux, et sa capacité horaire de traitement est relativement limitée compte tenu du grand nombre d'opérations de transfert que le robot doit exécuter pour transférer chaque éprouvette et/ou la cuvette associée entre les différentes unités et les différents supports en forme de râtelier prévus dans l'appareil.

Le brevet US 4,713,974 décrit un automate analyseur comportant un carrousel qui peut tourner autour d'un axe vertical et sur lequel plusieurs râteliers sont fixés de manière détachable. Chaque râtelier comporte trois séries d'alvéoles cylindriques, d'axe vertical, destinées à recevoir des flacons contenant des échantillons à analyser et fermés chacun par un bouchon transperçable. Lorsque les râteliers, garnis de flacons, sont fixés sur le plateau du carrousel, les flacons sont disposés en trois cercles concentriques centrés sur l'axe de rotation du plateau du carrousel, et les flacons sont alignés radialement par groupe de trois flacons. Ainsi, en faisant tourner le carrousel pas à pas, il est possible d'amener chaque fois un groupe de trois flacons à un poste fixe de travail situé près de la périphérie du plateau du carrousel. Dans ce poste de travail se trouve une unité de prélèvement et de distribution comportant une aiguille creuse s'étendant verticalement, qui est raccordée à un moyen d'aspiration/refoulement et qui est montée sur ressort de telle façon que son extrémité inférieure se trouve à un niveau un peu plus élevé que celui des bouchons des flacons. En plus de son mouvement de rotation, le plateau du carrousel peut être animé d'un mouvement horizontal de translation dans une direction radiale par rapport à l'axe de rotation du plateau, vers et à l'écart du poste de travail, de telle façon que n'importe quel flacon sélectionné parmi trois flacons alignés radialement et présent à un moment donné au poste de travail puisse être amené au dessous de l'aiguille de l'unité de prélèvement et de distribution, en alignement vertical avec ladite aiguille. Le plateau du carrousel comporte plusieurs trous qui sont alignés respectivement avec des trous formés dans le fond des alvéoles des râteliers fixés sur le plateau. L'unité de prélèvement et de distribution comporte en outre un élévateur, sous la forme d'une tige verticale, qui est alignée axialement avec l'aiguille et qui peut être déplacée verticalement vers le haut à travers un trou du plateau du carrousel pour soulever le flacon sélectionné qui a été amené en alignement vertical avec l'aiguille. Du fait du soulèvement du flacon sélectionné, le bouchon de celui-ci s'empale sur l'aiguille et le soulèvement du flacon est effectué jusqu'à ce que l'extrémité inférieure de l'aiguille bute contre le fond du flacon.

L'automate analyseur décrit dans le brevet US 4,713,974 est nettement plus compact que l'appareil décrit dans la demande de brevet internationale WO90/03834, et il permet d'éviter les nombreux transferts et manipulations qui doivent être effectués pour chaque éprouvette dans l'appareil décrit dans la demande de brevet internationale précitée. Toutefois, l'automate analyseur du brevet US 4,713,974 ne permet pas de soumettre le contenu des flacons à une centrifugation. Dans le cas où les échantillons liquides doivent être centrifugés avant d'être analysés, la centrifugation doit donc être effectuée dans une centrifugeuse classique.

Le brevet US 4,478,095 décrit un automate analyseur semblable à celui qui est décrit dans le brevet US 4,713,974. Il en diffère essentiellement par le fait que le carrousel comporte un plateau principal qui peut être animé seulement d'un mouvement rotatif et qui porte quatre plateaux planétaires auxiliaires pouvant tournés par rapport au plateau principal, chaque plateau auxiliaire comportant plusieurs alvéoles disposées en un seul cercle à sa périphérie pour recevoir des flacons contenant des échantillons liquides à analyser. Un dispositif d'entraînement comportant un moteur électrique et un système de transmission à courroies et poulies, ainsi qu'un frein électromagnétique et un embrayage électromagnétique permettent de faire tourner sélectivement soit le plateau principal avec les plateaux auxiliaires sans que ces derniers puissent tourner par rapport au plateau principal, soit les plateaux auxiliaires sans que le plateau principal puisse tourner, selon que le frein électromagnétique ou l'embrayage électromagnétique est excité. Ainsi, en faisant tourner tout d'abord le plateau principal, puis les plateaux auxiliaires, il est possible d'amener n'importe quel flacon sélectionné au poste de travail où se trouve l'unité de prélèvement et de distribution. Là encore, le carrousel de l'automate analyseur du brevet US 4,478,095 ne permet pas de centrifuger les échantillons liquides contenus dans les flacons portés par les plateaux auxiliaires du carrousel, de sorte que si les produits liquides à analyser doivent être centrifugés avant d'être analysés, la centrifugation doit être effectuée dans une centrifugeuse classique avant de placer les flacons dans les alvéoles des plateaux planétaires auxiliaires du carrousel de l'automate analyseur.

La présente invention a donc pour but de fournir un automate analyseur qui permet, en cas de besoin, de centrifuger les échantillons liquides à analyser, tout en étant plus compact et capable de traiter, par heure, un plus grand nombre d'échantillons liquides que l'appareil décrit dans la demande de brevet internationale WO90/03834.

A cet effet, l'invention a pour objet un appareil pour l'analyse d'échantillons liquides conditionnés dans des tubes à échantillon fermés par un bouchon transperçable, comportant un support apte à supporter en position verticale les tubes à échantillon, une unité de prélèvement et de distribution pour prélever dans chaque tube à échantillon porté par le support une partie de l'échantillon liquide contenu dans le tube à échantillon et pour distribuer au moins une fraction de la partie prélevée d'échantillon liquide dans au moins un réceptacle en vue d'un traitement et/ou d'une analyse de ladite fraction distribuée, ladite unité de prélèvement et de distribution comportant une aiguille creuse qui est raccordée à un moyen d'aspiration/refoulement et fixée en position verticale à un porte-aiguille mobile verticalement, et un moyen d'entraînement pour déplacer verticalement le porte-aiguille entre une première position dans laquelle l'extrémité inférieure de l'aiguille se trouve à un niveau plus élevé que celui du bouchon dudit tube à échantillon porté par le support, et une seconde position dans laquelle l'extrémité inférieure de l'aiguille se trouve à l'intérieur du liquide contenu dans ledit tube à échantillon porté par le support, caractérisé en ce que ledit support est constitué par un plateau circulaire muni de plusieurs porte-tube qui sont disposés à intervalles sur sa périphérie et qui comportent chacun un logement d'axe vertical pour recevoir et supporter un tube à échantillon, ledit plateau circulaire pouvant tourner autour d'un axe vertical pour amener et positionner successivement et sélectivement les porte-tube à un poste de travail où se trouve l'unité de prélèvement et de distribution, de telle façon que cette dernière puisse agir sur le tube à échantillon supporté par le porte-tube amené et positionné au poste de travail, en ce que chaque porte-tube est relié au plateau circulaire par une liaison à deux degrés de liberté, à savoir une liberté de mouvement vertical de translation et une liberté de mouvement de rotation autour d'une axe horizontal orienté tangentiellement par rapport au plateau circulaire, et en ce qu'au poste de travail est disposé un moyen d'appui apte à soutenir par en dessous le porte-tube amené et positionné au poste de travail.

Ainsi, avec l'appareil selon l'invention, si les échantillons liquides doivent être centrifugés afin de les séparer en au moins deux phases en vue d'analyser au moins une des deux phases de chaque échantillon, il suffit de faire tourner le plateau tournant à une vitesse de rotation appropriée pour la centrifugation. Grâce au fait que chaque porte-tube est relié au plateau tournant par une liaison à deux degrés de liberté permettant un mouvement de rotation de chaque porte-tube autour d'un axe horizontal tangentiel par rapport au plateau tournant, chaque tube à échantillon peut, sous l'action de la force centrifuge, prendre une position horizontale ou sensiblement horizontale qui est particulièrement favorable à la séparation des phases des échantillons liquides par ladite force centrifuge. Lorsque la vitesse de rotation du plateau est ensuite réduite pour amener sélectivement et pas à pas les porte-tube au poste de travail, les tubes à échantillon reprennent automatiquement, par gravité, une position verticale.

Chaque fois que le plateau tournant est arrêté pour immobiliser un tube à échantillon dans le poste de travail, l'aiguille de l'unité de prélèvement et de distribution peut être abaissée pour percer le bouchon du tube à échantillon immobilisé au poste de travail et pour prélever dans ce tube à échantillon la quantité désirée (aliquote) de l'échantillon liquide ou de la phase désirée de cet échantillon liquide. Grâce au fait que chaque porte-tube a une liberté de mouvement vertical de translation et grâce au moyen d'appui qui permet de soutenir par en dessous le porte-tube amené et positionné au poste de travail, les forces verticales, qui sont appliquées au bouchon du tube à échantillon au moment de son percement par l'aiguille de l'unité de prélèvement et de distribution et qui peuvent parfois atteindre plusieurs dizaines de Newton, ne sont pas transmises par le porte-tube au plateau circulaire tournant. Par conséquent, ce dernier ne risque pas d'être voilé par les forces verticales sus-mentionnées. Autrement, si le plateau était voilé, de fortes vibrations se produiraient chaque fois que le plateau est entraîné à grande vitesse, pendant les étapes de centrifugation. Ces vibrations entraîneraient une usure rapide des paliers de roulement du plateau et auraient une influence néfaste sur la séparation des échantillons liquides en plusieurs phases.

Du fait que le plateau circulaire tournant est déchargé des forces verticales sus-mentionnées, il n'a pas besoin d'avoir une grande rigidité et il peut être relativement léger, donc avoir une faible inertie. Ceci permet d'utiliser un moteur électrique de faible puissance et consommant peu d'énergie électrique pour l'entraînement en rotation du plateau. En outre, grâce à sa légèreté, le plateau tournant peut être arrêté plus facilement et avec une plus grande précision dans le positionnement des tubes à échantillon sous l'aiguille de l'unité de prélèvement et de distribution.

L'appareil selon l'invention peut en outre présenter une ou plusieurs des caractéristiques suivantes :
- chaque porte-tube est constitué par un fourreau cylindrique qui est ouvert à son extrémité supérieure et fermé à son extrémité inférieure, et qui comporte, près de son extrémité supérieure, deux tourillons alignés qui définissent l'axe horizontal de la liaison à deux degrés de liberté ;
- l'extrémité supérieure de chaque fourreau cylindrique est disposée entre deux branches d'une pièce de montage en forme de fourche, qui est solidaire du plateau circulaire et dont les deux branches s'étendent radialement vers l'extérieur dudit plateau circulaire, les deux tourillons du fourreau cylindrique étant supportés respectivement par les branches de la pièce de montage au moyen de la liaison à deux degrés de liberté ;
- chaque branche de la pièce de montage comporte une encoche verticale, dans laquelle est engagé l'un des deux tourillons du fourreau cylindrique ;
- dans un premier mode de réalisation de l'invention, chacun des deux tourillons est supporté élastiquement dans l'encoche verticale correspondante par un ressort souple ;
- chaque encoche verticale est formée dans la face supérieure de la branche correspondante de la pièce de montage et le ressort souple est disposé dans l'encoche verticale entre le fond de celle-ci et le tourillon ;
- dans ce cas, la pièce de montage porte un moyen amovible de retenue qui, en service, retient les deux tourillons dans les encoches verticales correspondantes ;
- dans une variante de réalisation, chaque encoche verticale est formée dans la face inférieure de la branche correspondante de la pièce de montage et le ressort souple est constitué par une lame flexible, dont une extrémité est fixée à la face inférieure de ladite branche correspondante et dont l'autre extrémité soutient élastiquement et retient le tourillon dans l'encoche verticale correspondante ;
- dans l'un ou l'autre cas, le moyen d'appui peut être constitué par un butoir fixe disposé au dessous de l'extrémité inférieure du fourreau cylindrique porte-tube amené et positionné au poste de travail, à une distance verticale de ladite extrémité inférieure qui est plus petite qu'une course maximale de déplacement vertical qui est permise audit fourreau cylindrique porte-tube par ladite liaison à deux degrés de liberté et par le ressort souple quand l'aiguille de l'unité de prélèvement et de distribution exerce une force de pénétration verticale, dirigée vers le bas, sur le bouchon du tube à échantillon installé dans ledit fourreau cylindrique porte-tube ;
- dans un autre mode de réalisation, chaque encoche verticale est formée dans la face supérieure de la branche correspondante de la pièce de montage et chaque tourillon repose sur le fond de l'encoche verticale correspondante ;
- dans ce cas, le moyen d'appui peut être constitué par une cale, qui peut être déplacée par un actionneur entre une première position dans laquelle ladite cale n'interfère pas avec les fourreaux cylindriques porte-tube lorsque le plateau circulaire est mis en rotation, et une seconde position dans laquelle ladite cale est en contact avec l'extrémité du fourreau cylindrique porte-tube amené et positionné au poste de travail et supporte ledit fourreau cylindrique dans une position verticale telle que ses deux tourillons ne reposent plus sur le fond des encoches verticales correspondantes dans les branches de la pièce de montage ;
- ladite cale est constituée par une pièce en forme de coin qui peut glisser, sous la commande de l'actionneur, sur une surface fixe de support et de guidage horizontal ;
- chaque pièce de montage comporte un moyen de butée propre à empêcher le fourreau cylindrique porte-tube de pivoter autour de l'axe horizontal défini par les deux tourillons et à maintenir ledit fourreau cylindrique en position verticale quand la cale est déplacée de sa première à sa seconde position par l'actionneur et vient au cours de ce déplacement en contact avec l'extrémité inférieure dudit fourreau cylindrique ;
- dans tous les modes de réalisation, le plateau circulaire est de préférence relié à des moyens d'entraînement aptes à faire tourner ledit plateau circulaire sélectivement à une première vitesse relativement rapide pour soumettre à une centrifugation les échantillons liquides contenus dans les tubes à échantillon portés par le plateau circulaire, et à une seconde vitesse, nettement plus lente que la première vitesse, pour amener et positionner successivement et sélectivement lesdits tubes à échantillon au poste de travail ;
- dans tous les modes de réalisation, les fourreaux cylindriques porte-tube peuvent être réalisés en une matière transparente ou chaque fourreau peut comporter une large fenêtre dans sa paroi cylindrique, de manière à permettre une lecture d'un code individuel d'identification porté par une étiquette fixée à chaque tube d'échantillon par un lecteur de code installé à poste fixe dans une position angulaire prédéfinie par rapport à l'axe vertical de rotation du plateau circulaire.

D'autres caractéristiques et avantages de l'invention apparaîtront au cours de la description suivante donnée à titre d'exemple en référence aux dessins annexés sur lesquels :
la figure 1 est une vue de dessus d'un automate analyseur selon la présente invention ;
la figure 2 est une vue partielle en perspective montrant une unité de prélèvement et de distribution de l'automate analyseur de la figure 1 ;
la figure 3 est une vue en partie en élévation et en partie en coupe suivant la ligne brisée III-III de la figure 1 ;
la figure 4A est une vue en perspective, à plus grande échelle, montrant un des porte-tube utilisé dans l'automate analyseur des figures 1 à 3 ;
la figure 4B montre une variante de réalisation du porte-tube de la figure 4A;
la figure 5 est une vue en partie en élévation et en partie en coupe suivant la ligne V-V de la figure 1, l'aiguille de l'unité de prélèvement et de distribution étant représentée en position haute ;
la figure 6 est une vue semblable à la figure 5, l'aiguille de l'unité de prélèvement et de distribution étant représentée en positon basse ;
la figure 7 est une vue semblable à la figure 3, montrant une variante de réalisation.

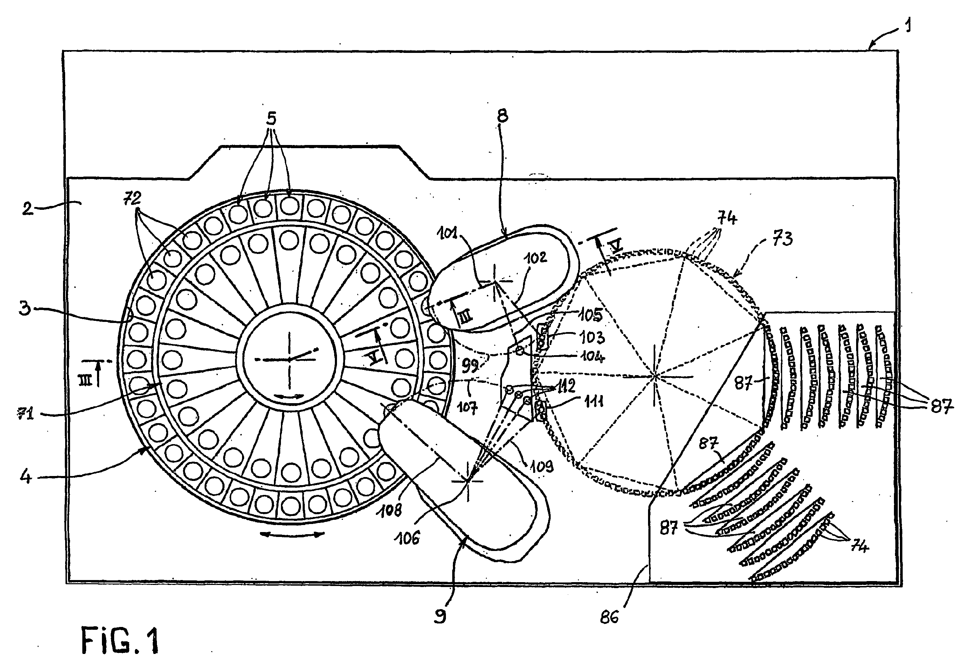

L'automate analyseur représenté dans les figures 1 à 3 comporte un châssis-caisse 1, dont la plaque supérieure 2 présente une large ouverture circulaire 3, qui laisse apparaître un plateau circulaire rotatif 4 situé au-dessous de l'ouverture 3. Plusieurs porte-tube 5, destinés à supporter chacun un tube à échantillon 6 fermé par un bouchon 7, sont montés à la périphérie du plateau 4 d'une manière qui sera décrite en détail plus loin.

Le plaque supérieure 2 du châssis 1 supporte au moins une, de préférence deux unités de prélèvement et de distribution 8 et 9 qui seront décrites en détail plus loin.

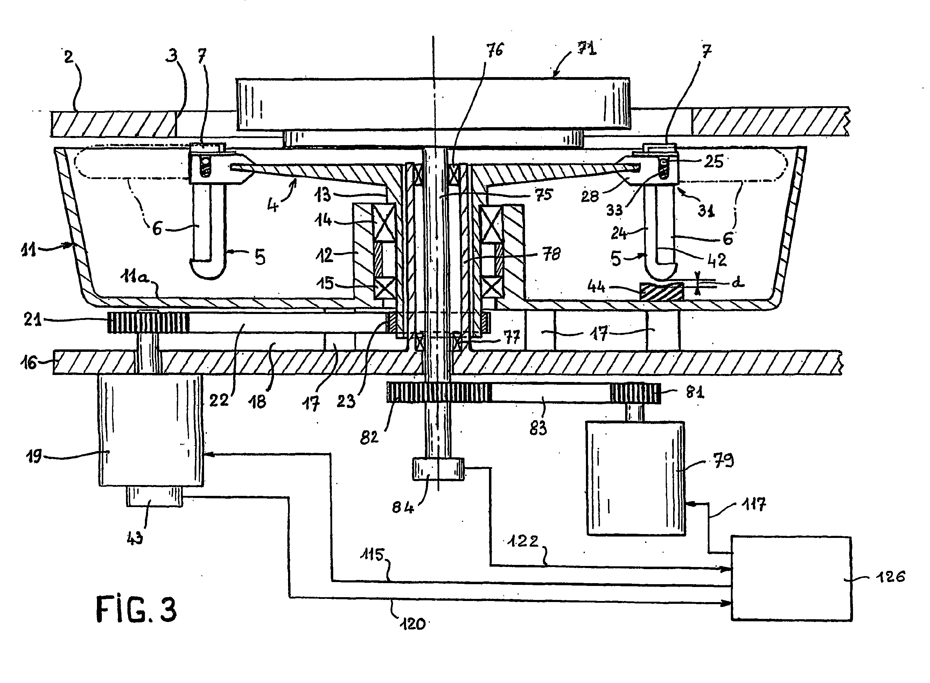

Le plateau 4 est disposé dans une cuvette 11 (figure 3), par exemple une cuvette à bord circulaire, dont le diamètre est sensiblement plus grand que celui du plateau 4. Au milieu de la cuvette 11 se trouve un puits cylindrique 12 qui fait saillie vers le haut à partir du fond 11a de la cuvette 11. Le plateau circulaire 4 est fixé à l'extrémité supérieure d'un arbre vertical creux 13 qui s'étend vers le bas à l'intérieur du puits 12 et est monté à rotation dans celui-ci par l'intermédiaire de paliers à roulements 14 et 15. Le plateau 4 et l'arbre 13 peuvent être réalisés d'une seule pièce, de préférence en un matériau léger, par exemple en une matière plastique ou en un métal léger tel que l'aluminium ou un alliage d'aluminium. La cuvette 11 est supportée par une plaque horizontale 16, qui fait partie du châssis 1, par l'intermédiaire de plusieurs colonnettes-entretoises 17, de manière à ménager un espace 18 entre la plaque 16 et le fond 11a de la cuvette 11. L'extrémité inférieure de l'arbre creux 13 fait saillie dans l'espace 18. L'arbre creux 13 et, par suite, le plateau 4 peuvent être entraînés en rotation par un moteur électrique 19, de préférence un moteur pas à pas, qui est fixé à la plaque 16 en dessous de celle-ci. L'arbre de sortie du moteur 19 traverse la plaque 16 et porte, à son extrémité supérieure, dans l'espace 18, une poulie crantée 21, qui est reliée cinématiquement par une courroie crantée 22 à une autre poulie crantée 23 qui est fixée à l'extrémité inférieure de l'arbre creux 13.

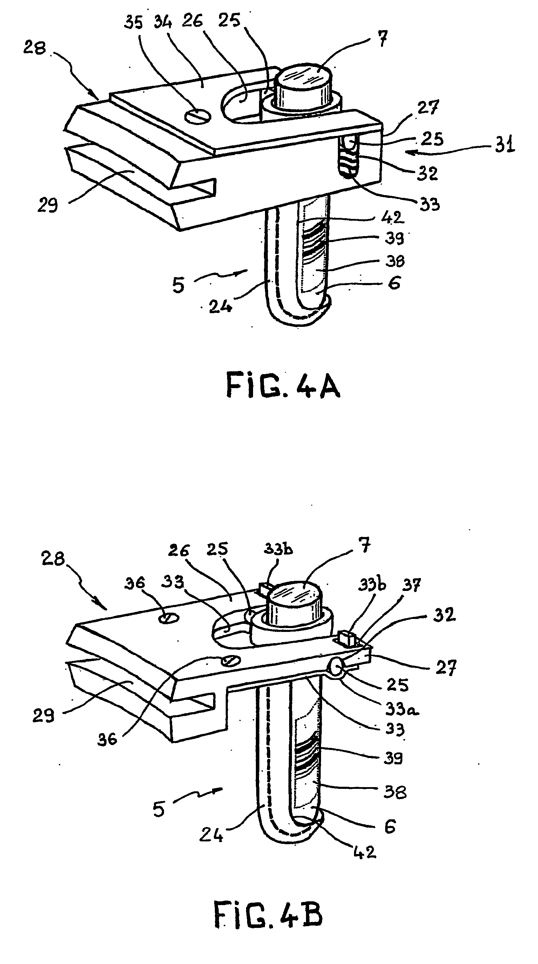

Comme montré dans la figure 4A, chaque porte-tube 5 est de préférence constitué par un fourreau cylindrique 24, qui est ouvert à son extrémité supérieure et fermé à son extrémité inférieure. Chaque fourreau 24 comporte, près de son extrémité supérieure, deux tourillons 25, dont les axes sont alignés et perpendiculaires à l'axe longitudinal du fourreau 24. L'extrémité supérieure de chaque fourreau 24 est disposée entre les deux branches 26 et 27 d'une pièce de montage 28 en forme de fourche, qui est fixée au plateau circulaire 4, à la périphérie de celui-ci. Par exemple, la pièce de montage 28 comporte, du côté opposé aux deux branches 26 et 27, une rainure 29 dont la largeur correspond à l'épaisseur du bord du plateau circulaire 4. La pièce de montage 28 est emboîtée, par sa rainure 29, sur le bord du plateau circulaire 4 et elle est fixée à celui-ci par collage, par soudage, par des vis ou par tout autre moyen approprié de fixation. Une fois que la pièce de montage 28 est fixée au plateau 4, les branches 26 et 27 s'étendent radialement vers l'extérieur dudit plateau.

Les deux tourillons 25 du fourreau 24 sont supportés par les branches 26 et 27 de la pièce de montage 8 au moyen d'une liaison à deux degrés de liberté 31, qui donne au fourreau 24 la possibilité d'avoir un mouvement vertical de translation et un mouvement de rotation autour d'un axe horizontal qui est orienté tangentiellement par rapport au plateau circulaire 4 et qui est défini par les deux tourillons 25. Plus précisément, comme montré dans la figure 4A, chacune des deux branches 26 et 27 de la pièce de montage 28 comporte, dans sa face supérieure, une profonde encoche verticale 32 dans laquelle est engagé l'un des deux tourillons 25 du fourreau 24. Un ressort souple 33, par exemple un ressort hélicoïdal, est disposé dans chacune des deux encoches 32, entre le fond de celles-ci et le tourillon 25. Une plaque 34, découpée en forme de U, est fixée de manière détachable, par au moins une vis 35, à la face supérieure de la pièce de montage 28 de telle façon que, en service, la plaque 34 recouvre les encoches 32 pour y retenir les tourillons 25.

La figure 4B montre une variante de réalisation de la liaison à deux degrés de liberté 31. Dans la figure 4B, les éléments qui sont identiques ou qui jouent le même rôle que ceux de la figure 4A sont désignés par les mêmes numéros de références. Dans la variante de réalisation de la figure 4B, chaque encoche verticale 32 est formée dans la face inférieure de la branche correspondante 26 ou 27 de la pièce de montage 28 et chaque ressort souple 33 est constitué par une lame flexible, dont une extrémité est fixée à la face inférieure de la branche 26 ou 27 par un ensemble boulon et écrou ou par une vis 36. L'autre extrémité de chaque lame de ressort 33 soutient élastiquement et retient le tourillon 25 dans l'encoche verticale correspondante 32. Cette dernière peut avoir par exemple un profil semi-circulaire, dont le diamètre correspond au diamètre extérieur du tourillon 25. Dans ce cas, chaque lame de ressort 33 comporte une partie galbée 33a, qui a également un profil semi-circulaire épousant la surface cylindrique extérieure du tourillon 25. De préférence, chaque lame de ressort 33 comporte en outre, à son extrémité libre, une partie 33b, qui est coudée à angle droit vers le haut et engagée dans un orifice 37 formé dans la branche correspondante 26 ou 27 de la pièce de montage 28. Les deux parties coudées 33b permettent d'éviter que les tourillons 25 s'échappent radialement vers l'extérieur au delà des extrémités libres des lames de ressort 33 lorsque ces dernières sont fléchies vers le bas sous l'action d'une force verticale appliquée au bouchon 7 du tube à échantillon 6 supporté par le fourreau 24.

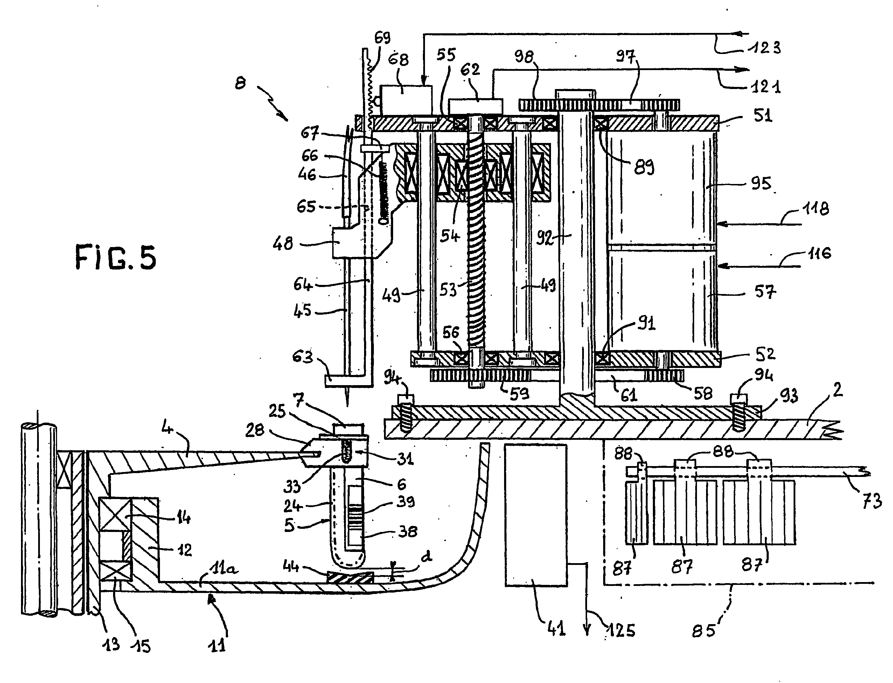

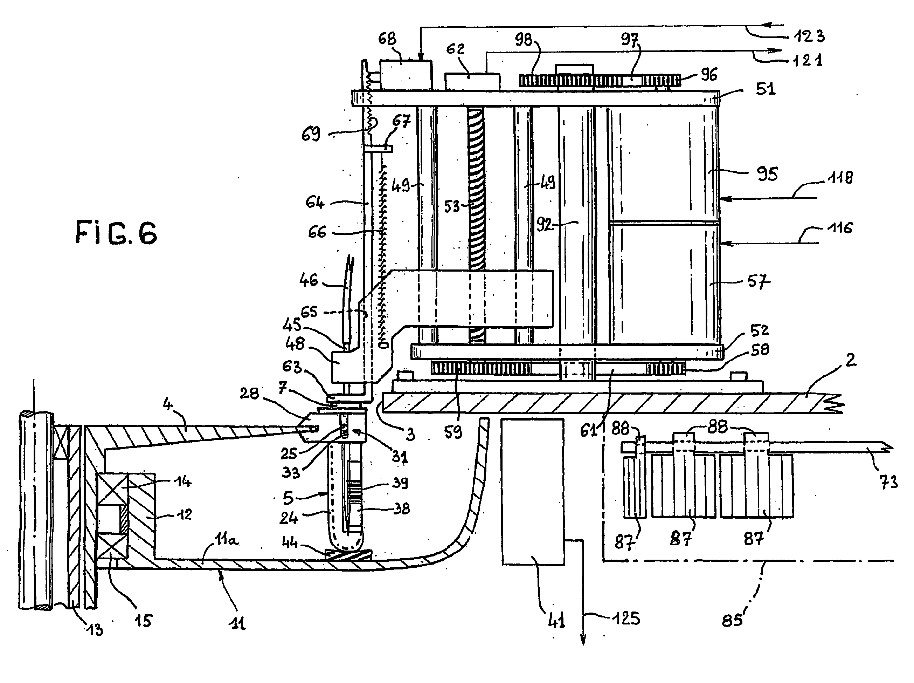

Chaque tube à échantillon 6 est pourvu, de façon connue, d'une étiquette autocollante 38 portant un code d'identification 39, par exemple sous la forme d'un code à barres, pouvant être lu par un lecteur de code 41 installé à poste fixe dans une position angulaire prédéfinie par rapport à l'axe vertical de rotation du plateau circulaire 4. Par exemple, comme montré dans les figures 5 et 6, le lecteur de code 41 peut être disposé à l'extérieur de la cuvette 11, au dessous du plateau supérieur 2 du châssis 1, à l'aplomb de l'unité de prélèvement et de distribution 8. Pour permettre la lecture du code d'identification 39 porté par l'étiquette 38 de chaque tube à échantillon 6, chaque fourreau porte-tube 24 comporte, dans sa paroi cylindrique, une large fenêtre 42. A titre de variante, chaque fourreau 24 pourrait être réalisé en une matière transparente, par exemple en une matière plastique transparente. De même, la cuvette 11 est réalisée en une matière plastique transparente ou la partie de sa paroi périphérique située en regard du lecteur de code 41 comporte une fenêtre.

Ainsi, chaque fois qu'une tube à échantillon 6 est amené et positionné par le plateau circulaire tournant 4 dans une position angulaire correspondant à la position de l'unité de prélèvement et de distribution 8, le code 39 porté par l'étiquette 38 du tube à échantillon 6 peut être lu par le lecteur de code 41. Il faut noter que le lecteur de code 41 n'est pas nécessairement situé dans une position correspondant à celle de l'unité de prélèvement et de distribution 8. En fait, le lecteur de code 41 peut être installé en n'importe quel point de la périphérie de la cuvette 11. En effet, un codeur angulaire 43 (figure 3), associé par exemple au moteur électrique 19 (il pourrait, en variante, être associé au plateau circulaire tournant 4), permet de connaître à tout moment la position angulaire du plateau 4. En conséquence, si le lecteur de code 41 est installé dans une position angulaire différente de celle de l'unité de prélèvement et de distribution 8, pour amener l'un quelconque des tubes à échantillon 6 dont le code d'identification 39 a été lu par le lecteur de code 41, il suffit de faire tourner le plateau circulaire 4 d'une angle correspondant à l'écart angulaire entre les positions angulaires dans lesquelles se trouvent respectivement le lecteur de code 41 et l'unité de prélèvement et de distribution 8 à la périphérie de la cuvette 11.

En se reportant maintenant aux figures 3, 5 et 6, on peut voir un butoir 44, par exemple en caoutchouc dur, qui est fixé sur le fond 11a de la cuvette 11 à un emplacement tel que le butoir 44 soit verticalement aligné avec le fourreau porte-tube 24 qui, à un moment donné, est positionné en correspondance avec l'unité de prélèvement et de distribution 8. La surface supérieure du butoir 44 se trouve à une distance verticale d de l'extrémité inférieure du fourreau porte-tube 24, qui est plus petite que la course maximale de déplacement vertical qui est permise au fourreau 24 par la liaison sus-mentionnée 31 à deux degrés de liberté, en combinaison avec le ressort 33. Comme on le verra plus loin, le butoir 44 fait office de moyen d'appui pour le fourreau 24 pendant que l'unité de prélèvement et de distribution 8 prélève un échantillon de liquide (aliquote) dans le tube à échantillon 6 supporté par ledit fourreau.

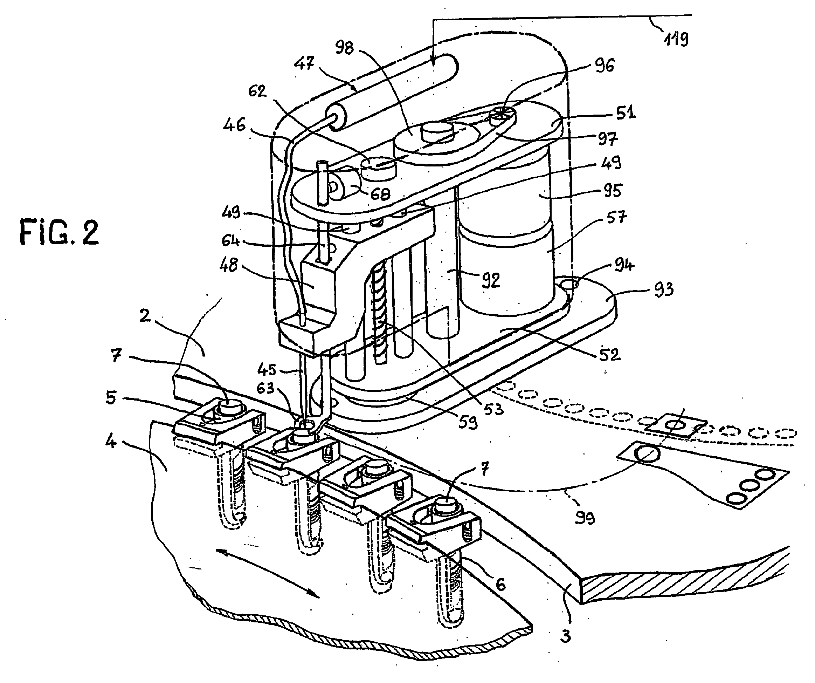

L'unité de prélèvement et de distribution 8 comporte, de façon connue en soi, une aiguille creuse 45, qui est raccordée par un tuyau souple 46 à un moyen d'aspiration/refoulement 47 qui peut être par exemple constitué par une seringue dont le piston peut être déplacé par un actionneur, et qui est représentée seulement de manière schématique dans la figure 2 dans la mesure où une telle seringue et la manière dont elle est raccordée à l'aiguille creuse 45 sont bien connues, par exemple par les deux brevets US 4,478,095 et 4,713,974 mentionnés plus haut.

A la différence des automates analyseurs décrits dans ces deux brevets américains, l'aiguille creuse 45 de l'unité de prélèvement et de distribution 8 de l'automate analyseur selon l'invention est fixée en position verticale à un porte-aiguille 48 qui peut être déplacé verticalement entre une position (figure 5) dans laquelle l'extrémité inférieure de l'aiguille 45 se trouve à un niveau plus élevé que celui du bouchon 7 du tube à échantillon 6 qui a été amené à un instant donné en correspondance avec l'unité de prélèvement et de distribution 8, et une seconde position (figure 6) dans laquelle l'extrémité inférieure de l'aiguille, après avoir transpercée le bouchon 7, se trouve à l'intérieur du liquide contenu dans ledit tube à échantillon.

A cet effet, le porte-aiguille 48 est monté coulissant sur deux colonnes de guidage 49 dont les extrémités supérieure et inférieure sont fixées rigidement respectivement à une plaque horizontale supérieure 51 et à une plaque horizontale inférieure 52. Une vis sans fin 53 est disposée verticalement entre les deux colonnes 49 et est en prise avec un écrou 54, par exemple un écrou à billes, fixé au porte-aiguille 48. La vis 51 est montée à rotation dans des paliers 55 et 56, par exemple des roulements à billes, portés respectivement par les plaques 51 et 52. La vis 53 peut être entraînée en rotation par un moteur électrique 57, par exemple un moteur pas à pas, qui est fixé à la plaque 52, et par une transmission constituée par exemple par deux poulies crantées 58 et 59 qui sont fixées respectivement à l'arbre de sortie du moteur 57 et à l'extrémité inférieure de la vis 53, et par une courroie crantée 61.

Un codeur angulaire 62 porté par la plaque 51 et associé à la vis 53 permet, à tout instant, de connaître le nombre de tours ou de fractions de tour effectués par la vis 53, donc la position en hauteur du porte-aiguille 48 et de l'aiguille 45. Ainsi, en appliquant au moteur pas à pas 57 un nombre approprié d'impulsions, il est possible d'amener le porte-aiguille 48 dans toute position verticale désirée sous le contrôle du codeur angulaire 62. En particulier, l'extrémité inférieure de l'aiguille 45 peut être amenée à la profondeur désirée dans l'échantillon liquide contenu dans le tube à échantillon 6 qui à un instant donné a été amené et positionné en correspondance avec l'unité de prélèvement et de distribution 8.

Lorsque le porte-aiguille 48 est abaissé en vue de prélever un aliquote dans le tube à échantillon 6, l'aiguille 45 vient tout d'abord perforer le bouchon 7 du tube 6. Ce faisant, l'aiguille 45 applique au bouchon 7 une force dont l'intensité peut varier selon la nature et/ou l'épaisseur du bouchon 7. Si cette force, qui peut atteindre plusieurs dizaines de Newton, était appliquée au plateau circulaire 4, elle pourrait être préjudiciable au bon fonctionnement de ce plateau. Il est donc important que cette force ne soit pas transmise au plateau 4. Ce problème est résolu en combinaison par la liaison sus-mentionnée 31 à deux degrés de liberté, qui relie chaque porte-tube 5 (fourreau 24) à la pièce de montage correspondante 28 fixée au plateau 4, et par le moyen d'appui constitué par le butoir 44. En effet, sous l'action de la force exercée par l'aiguille 45 sur le bouchon 7, les tourillons 25 du fourreau 24 sont déplacés vers le bas, contre la force antagoniste des ressorts souples 33, dans les encoches verticales 32 de la pièce montage 28, jusqu'à ce que l'extrémité inférieure du fourreau 24 vienne en contact avec la surface supérieure du butoir 44, lequel absorbe alors entièrement l'effort vertical exercé par l'aiguille 45 sur le bouchon 7. Il est à noter que les ressorts 33 doivent avoir une grande souplesse de façon à transmettre seulement un très faible effort vertical à la pièce de montage 28, donc au plateau circulaire 4.

Au porte-aiguille 48 peut être associé un poussoir 63 en forme de pied de biche, qui entoure l'extrémité inférieure de l'aiguille 45 et qui est fixé à l'extrémité inférieure d'une tige 64 montée coulissante dans un trou vertical 65 du porte-aiguille 48 (figures 2, 5 et 6). Un ressort hélicoïdal 66 est attaché par son extrémité inférieure au porte-aiguille 48 et par son extrémité supérieure à une patte de fixation 67 qui est elle même fixée à la tige 64 au-dessus du porte-aiguille 48. La tige 64 peut être bloquée par un moyen de blocage 68 fixé à la plaque 51. Le moyen de blocage 68 peut être par exemple constitué par un électroaimant dont le noyau plongeur a une extrémité en forme de coin qui peut être engagée entre les dents d'une crémaillère 69 formée à la partie supérieure de la tige 64.

Lorsque le noyau plongeur de l'électroaimant 68 est écarté de la crémaillère 69, et que le porte-aiguille 48 est abaissé au moyen de la vis 53, la tige 64 et le pied de biche 63 sont également abaissés jusqu'au moment où le pied de biche vient en contact avec le bouchon 7, alors que l'extrémité inférieure du fourreau 24 est en contact avec le butoir 44. A ce moment, le mouvement descendant de la tige 64 s'arrête et le ressort 66 est tendu pendant que le porte-aiguille 48 poursuit sa descente jusqu'au moment où l'extrémité inférieure de l'aiguille 45 atteint la profondeur désirée dans le tube à échantillon 6. Sous l'effet de la tension du ressort 66, le pied de biche 63 maintien le fourreau 24 en contact avec le butoir 44. Pendant que l'aiguille 45 prélève un échantillon de liquide dans le tube 6, l'électroaimant 68 peut être actionné de telle façon que son noyau plongeur s'engage entre deux dents de la crémaillère 69 pour bloquer la tige 64. Après que la quantité désirée d'échantillon liquide (aliquote) a été prélevée dans le tube à échantillon 6, le porte-aiguille 48 est relevé dans sa position haute au moyen de la vis sans fin 53, le relevage étant aidé par le ressort 66 qui est sous tension. Pendant le relevage du porte-aiguille 48, l'électroaimant 68 continu à bloquer momentanément la tige 64 afin de maintenir le pied de biche 63 en appui sur le bouchon 7 du tube à échantillon 6 et d'empêcher ainsi que le bouchon 7 et le tube 6 ne soient soulevés par suite des frottements s'exerçant entre l'aiguille 45 et le bouchon 7. Après que le porte-aiguille 48 a été relevé d'une quantité telle que l'aiguille 45 a été complètement extraite du tube 6 et du bouchon 7, l'électroaimant 68 est actionné de manière à libérer la tige 64. Ensuite, lorsque le porte-aiguille 48 poursuit son mouvement ascendant, il rencontre la patte de fixation 67, provoquant ainsi le relevage de la tige 64 et du pied de biche 63.

Dans le cas où les échantillons liquides (aliquotes) prélevés dans les tubes à échantillon 6 sont soumis à une analyse chromatographique, l'échantillon liquide prélevé à un moment donné peut être acheminé dans une boucle d'analyse (non-montrée) intercalée de façon connue entre l'aiguille 45 et la seringue 47. L'analyse chromatographique peut aussi être effectuée après distribution de l'échantillon liquide dans l'un des réceptacles 74 du plateau 73 décrit plus loin.

Dans le cas où les échantillons liquides prélevés dans les tubes à échantillon 6 doivent être traités par un ou plusieurs réactifs, l'automate analyseur selon l'invention peut en outre comprendre un plateau porte-réactif 71 (figure 1) de forme circulaire, à la périphérie duquel sont fixées plusieurs coupelles ou flacons 72 contenant chacun un réactif, ainsi qu'un autre plateau 73 (figures 1 et 5) également de forme circulaire, à la périphérie duquel sont disposés plusieurs réceptacles 74 destinés à recevoir des échantillons liquides prélevés dans les tubes à échantillon 6 par l'unité de prélèvement et de distribution 8 et un ou plusieurs réactifs prélevés par l'unité de prélèvement et de distribution 9.

Comme montré dans les figures 1 et 3, le plateau porte-réactif 71 a un diamètre légèrement plus petit que celui du plateau 4 et il est avantageusement disposé coaxialement au-dessus de ce dernier plateau. Le plateau 71 est fixé à l'extrémité supérieure d'un arbre 75 qui est monté à rotation dans des paliers 76 et 77, par exemple des roulements à billes, installés dans un tube vertical de support 78 qui s'étend coaxialement à l'intérieur de l'arbre creux 13 du plateau 4 et dont l'extrémité inférieure est fixée rigidement à la plaque 16 du châssis. L'arbre 75 passe à travers un trou de la plaque 16 et il peut être entraîné en rotation au moyen d'un moteur électrique 79, de préférence un moteur pas à pas, et au moyen d'une transmission comprenant par exemple deux poulies crantées 81 et 82 fixées respectivement à l'arbre de sortie du moteur 79 et à l'arbre 75, et une courroie crantée 83. Le moteur 79 est monté sur un support approprié (non-montré) qui est fixé à la plaque 16 du châssis. Un codeur angulaire 84 associé à l'arbre 75 permet de connaître à tout moment la position angulaire du plateau porte-réactif 71.

Comme montré dans les figures 5 et 6, le plateau 73 est situé juste au-dessous de la plaque supérieure 2 du châssis et il est de préférence logé dans une enceinte 85, représentée de manière schématique en traits mixtes, qui peut être maintenue à une température désirée par des moyens de conditionnement thermiques appropriés (non-montrés). Un couvercle 86 (figure 1) articulé sur la plaque supérieure 2 du châssis par une charnière donne accès à une zone de stockage temporaire dans l'enceinte 85. Lorsque le couvercle 86 est soulevé, il est également possible d'avoir accès à une partie de la périphérie du plateau 73. Les réceptacles 74 sont de préférence organisés par groupes comportant chacun par exemple seize réceptacles, chaque groupe étant porté par un râtelier 87 ayant, vue de dessus, la forme d'un segment de cercle. A titre de variante, les réceptacles 74 peuvent être constitués par des alvéoles formées directement dans les râteliers 87. Comme montré dans les figures 5 et 6, chaque râtelier 87 est muni d'une patte de fixation 88 au moyen de laquelle il peut être accroché ou fixé de toute autre manière appropriée à la périphérie du plateau 73.

Le plateau 73 peut être entraîné en rotation par un moteur électrique (non-montré), par exemple un moteur pas à pas, et par une transmission appropriée (également non-montrée). Ce moteur électrique et cette transmission peuvent être semblables à ceux qui ont été décrits plus haut à propos de l'entraînement du plateau porte-réactif 71 ou à propos de l'entraînement du plateau 4, un codeur angulaire étant là encore prévu pour donner à tout moment la position angulaire du plateau 73.

Afin de permettre à l'unité de prélèvement et de distribution 8 de délivrer aux réceptacles 74 les échantillons prélevés dans les tubes à échantillon 6, les deux plaques 51 et 52 sont montées à rotation, respectivement par des paliers 89 et 91, par exemple des roulements à billes, sur un axe vertical fixe 92, dont l'extrémité inférieure est fixée à une plaque de base 93, elle même fixée par des vis 94 à la plaque supérieure 2 du châssis comme montré dans la figure 5.

L'unité de prélèvement et de distribution 8 peut être tournée autour de l'axe 92 au moyen d'un moteur électrique 95, par exemple un moteur pas à pas, qui est aligné verticalement au-dessus du moteur électrique 57 et qui est fixé à la face inférieure de la plaque 51. L'arbre de sortie du moteur 95 traverse la plaque 51 et porte, à son extrémité supérieure, une poulie crantée 96 en prise avec une courroie crantée 97 qui passe autour d'une autre poulie crantée 98 fixée rigidement à l'extrémité supérieure de l'axe 92 (figures 2, 5 et 6). Comme la poulie crantée 98 est fixe, une rotation de la poulie crantée 96 a pour effet de faire tourner la totalité de l'unité de prélèvement et de distribution 8 autour de l'axe 92.

Un codeur angulaire (non-montré) associé au moteur 95, permet de connaître à tout instant la position angulaire de l'unité de prélèvement et de distribution 8 par rapport à l'axe 92.

Ainsi, en activant le moteur 95, l'aiguille 45 de l'unité de prélèvement et de distribution 8 peut être déplacée le long d'une trajectoire en arc de cercle 99 (figures 1 et 2) entre une position angulaire 101 dans laquelle l'aiguille 45 se trouve au-dessus d'un tube à échantillon 6 à la périphérie du plateau 4, et une position angulaire 102 dans laquelle l'aiguille 45 se trouve au-dessus de l'un des réceptacles 74 à la périphérie du plateau 73. Dans la position angulaire 102, l'aiguille 45 peut être abaissée dans le réceptacle 74 à travers une ouverture 103 prévue dans la plaque supérieure 2 du châssis. Un puits de lavage 104, dans lequel l'aiguille 45 peut être abaissée pour y être lavée et rincée, est prévu sur la trajectoire 99 dans une position angulaire 105 située entre les positions angulaires 101 et 102.

L'unité de prélèvement et de distribution 9, qui est conçue pour prélever un réactif dans une coupelle 72 sélectionnée parmi les coupelles supportées par le plateau porte-réactif 71, et pour délivrer le réactif prélevé dans l'un des réceptacles 74 porté par le plateau 73, peut avoir une structure semblable à celle décrite à propos de l'unité de prélèvement et de distribution 8. Toutefois, dans l'unité de prélèvement et de distribution 9, le pied de biche 63, la tige 64, le ressort 66 et l'électroaimant 68 sont absents, et l'aiguille 45 est remplacée par une pipette. L'unité de prélèvement et de distribution 9 peut tourner en bloc autour d'un axe 106 (figure 1) de telle façon que la pipette décrive une trajectoire en arc de cercle 107 entre une position angulaire 108 dans laquelle la pipette est placée au-dessus de l'une des coupelles 72 du plateau porte-réactif 71, et une autre position angulaire 109 dans laquelle la pipette est située au-dessus de l'un des réceptacles 74 à la périphérie du plateau 73. Dans la position angulaire 109, la pipette peut être abaissée dans le réceptacle 74 à travers une ouverture 111 prévue dans la plaque supérieure 2 du châssis. La pipette de l'unité de prélèvement et de distribution 9 peut également être abaissée dans l'un quelconque des trois puits de lavage 112 situés sur la trajectoire en arc de cercle 107.

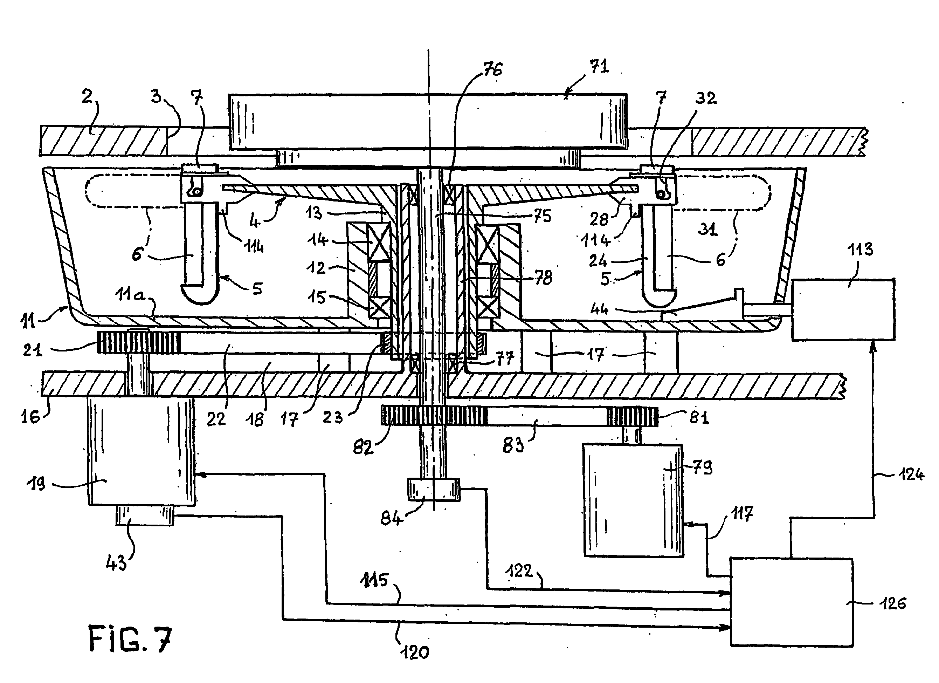

La figure 7 montre un autre mode de réalisation dans lequel les éléments qui sont identiques ou qui jouent le même rôle que ceux qui sont montrés dans les figures 3 et 4A, sont désignés par les mêmes numéros de références et ne seront pas décrits à nouveau en détail. Dans le mode de réalisation représenté sur la figure 7, la liaison 31 à deux degrés de liberté ne comporte pas de ressort 33 et les deux tourillons 25 de chaque fourreau porte-tube 24 reposent sur le fond des deux encoches 32 de la pièce de montage 28. De préférence, chaque encoche 32 présente, dans la région du fond de l'encoche, un élargissement dirigé radialement vers l'extérieur par rapport à l'axe de rotation du plateau 4.

Dans la figure 7, le moyen d'appui 44 n'est pas constitué par un butoir fixe, mais par une cale qui peut déplacée par un actionneur 113, par exemple un électroaimant, entre une première position montrée en traits pleins dans la figure 7 et une seconde position montrée en traits mixtes. Dans la première position, la cale 44 n'interfère pas avec les fourreaux porte-tube 24 lorsque le plateau 4 est mis en rotation.

Lorsqu'un tube à échantillon 6 sélectionné a été amené en correspondance avec l'unité de prélèvement et de distribution 8, avant que l'aiguille 45 de cette dernière ne soit abaissée, l'électroaimant 113 est actionné de manière à amener la cale 44 dans sa seconde position, dans laquelle elle est en contact avec l'extrémité inférieure du fourreau porte-tube 24 et supporte celui-ci dans une position verticale telle que ses deux tourillons 25 ne reposent plus sur le fond des encoches 32. Dans ces conditions, lorsque l'aiguille 45 est abaissée et qu'elle applique au bouchon 7 du tube à échantillon 6 une force verticale dirigée vers le bas, cette force n'est pas transmise au plateau circulaire 4, mais elle est absorbée par la cale 44.

Comme montré dans la figure 7, la cale 44 est de préférence constituée par une pièce en forme de coin, qui peut glisser, sous la commande de l'électroaimant 113, sur une surface fixe de support et de guidage horizontal, par exemple sur le fond 11a de la cuvette 11. La direction de déplacement de la cale 44 de sa première à sa seconde position est radiale par rapport à l'axe de rotation du plateau 4, et perpendiculaire à l'axe de pivotement du porte-tube 5 défini par les deux tourillons 25. En conséquence, lorsque la cale 44 est déplacée de sa première à sa seconde position, il pourrait en résulter qu'elle fasse pivoter d'un certain angle le porte-tube 5 et le tube à échantillon 6 qu'il contient autour de l'axe des tourillons 25 et que, par suite, le tube à échantillon 6 ne soit plus vertical au moment où l'aiguille 45 de l'unité de prélèvement et de distribution 8 est abaissée. Pour éviter cela, chaque pièce de montage 28 peut être dotée d'une butée 114 comme montré dans la figure 7.

Dans les deux modes de réalisation, les divers organes actifs de l'automate analyseur, comme par exemple les moteurs électriques 19, 57 , 79 et 95, la seringue 47, les codeurs angulaires 43, 62 et 84, les électroaimants 68 et 113, et le lecteur de code 41, sont connectés respectivement par des lignes 115, 116, 117, 118, 119, 120, 121, 122, 123, 124 et 125 à une unité de commande 126 (figures 3 et 7) incluant un ordinateur qui gère le fonctionnement de l'automate analyseur. En particulier, lorsque le contenu des tubes à échantillon 6 doit être soumis à une centrifugation avant d'être analysé, l'unité de commande 126 peut être programmée pour commander le moteur électrique 19 afin qu'il tourne à une grande vitesse de rotation pendant le temps nécessaire pour effectuer la centrifugation, puis pour qu'il tourne à une vitesse plus lente pour amener et positionner successivement et sélectivement les tubes à échantillon 6 en correspondance avec l'unité de prélèvement et de distribution 8.

Bien entendu, les moteurs électriques et les codeurs angulaires (non-montrés) associés à l'unité de prélèvement et de distribution 9 et au plateau 73 sont aussi reliés à l'unité de commande 126. Cette dernière est programmée ou programmable pour commander la rotation des plateaux 71 et 73 et le fonctionnement de l'unité de prélèvement et de distribution 9 afin de prélever, chaque fois que cela est nécessaire, au moins un réactif dans une coupelle sélectionnée 72 du plateau 71 et pour délivrer le réactif prélevé dans un réceptacle sélectionné 74 du plateau 73.

Il va de soi que les modes de réalisation qui ont été décrits ci-dessus ont été donnés à titre d'exemple purement indicatif et nullement limitatif et que de nombreuses modifications peuvent être apportées par l'homme de l'art sans pour autant sortir du cadre de l'invention. C'est ainsi que les pièces de montage peuvent faire partie intégrante du plateau 4.

## Revendications

1. Appareil pour l'analyse d'échantillons liquides conditionnés dans des tubes à échantillon (6) fermés par un bouchon transperçable (7), comportant un support (4) apte à supporter en position verticale les tubes à échantillon, une unité de prélèvement et de distribution (8) pour prélever dans chaque tube à échantillon porté par le support une partie de l'échantillon liquide contenu dans le tube à échantillon et pour distribuer au moins une fraction de la partie prélevée d'échantillon liquide dans au moins un réceptacle (74) en vue d'un traitement et/ou d'une analyse de ladite fraction distribuée, ladite unité de prélèvement et de distribution comportant une aiguille creuse (45) qui est raccordée à un moyen d'aspiration/refoulement (47) et fixée en position verticale à un porte-aiguille (48) mobile verticalement, et un moyen d'entraînement (53, 54, 57, 58, 59, 61) pour déplacer verticalement le porte-aiguille et l'aiguille entre une première position dans laquelle l'extrémité inférieure de l'aiguille se trouve à un niveau plus élevé que celui du bouchon dudit tube à échantillon porté par le support, et une seconde position dans laquelle l'extrémité inférieure de l'aiguille se trouve à l'intérieur du liquide contenu dans ledit tube à échantillon porté par le support, **caractérisé en ce que** ledit support (4) est constitué par un plateau circulaire muni de plusieurs porte-tube (5) qui sont disposés à intervalles sur sa périphérie et qui comportent chacun un logement d'axe vertical pour recevoir et supporter un tube à échantillon, ledit plateau circulaire pouvant tourner autour d'un axe vertical pour amener et positionner successivement et sélectivement les porte-tube (5) à un poste de travail où se trouve l'unité de prélèvement et de distribution (8), de telle façon que cette dernière puisse agir sur le tube à échantillon (6) supporté par le porte-tube amené et positionné au poste de travail, **en ce que** chaque porte-tube (5) est relié au plateau circulaire (4) par une liaison (31) à deux degrés de liberté, à savoir une liberté de mouvement vertical de translation et une liberté de mouvement de rotation autour d'un axe horizontal orienté tangentiellement par rapport au plateau circulaire, et **en ce qu'**au poste de travail est disposé un moyen d'appui (44) apte à soutenir par en dessous le porte-tube (5) amené et positionné au poste de travail.

2. Appareil selon la revendication1, **caractérisé en ce que** chaque porte-tube (5) est constitué par un fourreau cylindrique (24) qui est ouvert à son extrémité supérieure et fermé à son extrémité inférieure, et qui comporte, près de son extrémité supérieure, deux tourillons (25) alignés qui définissent l'axe horizontal de la liaison (31) à deux degrés de liberté.

3. Appareil selon la revendication 2, **caractérisé en ce que** l'extrémité de chaque fourreau cylindrique (24) est disposée entre deux branches (26, 27) d'une pièce de montage (28) en forme de fourche, qui est solidaire du plateau circulaire (4) et dont les deux branches s'étendent radialement vers l'extérieur dudit plateau circulaire, les deux tourillons (25) du fourreau cylindrique (24) étant supporté respectivement par les branches de la pièce de montage (28) au moyen de la liaison (31) à deux degrés de liberté.

4. Appareil selon la revendication 3, **caractérisé en ce que** chaque branche (26, 27) de la pièce de montage (28) comporte une encoche verticale (32), dans laquelle est engagé l'un des deux tourillons (25) du fourreau cylindrique (24).

5. Appareil selon la revendication 4, **caractérisé en ce que** chacun des deux tourillons (25) est supporté élastiquement dans l'encoche verticale correspondante (32) par un ressort souple (33).

6. Appareil selon la revendication 5, **caractérisé en ce que** chaque encoche verticale (32) est formée dans la face supérieure de la branche correspondante (26 ou 27) de la pièce de montage (28) et le ressort souple (33) est disposé dans l'encoche verticale (32) entre le fond de celle-ci et le tourillon (25).

7. Appareil selon la revendication 6, **caractérisé en ce que** la pièce de montage (28) porte un moyen amovible de retenue (34) qui, en service, retient les deux tourillons (25) dans les encoches verticales correspondantes (32).

8. Appareil selon la revendication 5, **caractérisé en ce que** chaque encoche verticale (32) est formée dans la face inférieure de la branche correspondante (26 ou 27) de la pièce de montage (28) et le ressort souple (33) est constitué par une lame flexible, dont une extrémité est fixée à la face inférieure de ladite branche correspondante et dont l'autre extrémité soutient élastiquement et retient le tourillon (25) dans l'encoche verticale correspondante.

9. Appareil selon l'une quelconque des revendications 1 à 8, **caractérisé en ce que** le moyen d'appui (44) est constitué par un butoir fixe disposé au dessous de l'extrémité inférieure du fourreau cylindrique porte-tube (24) amené et positionné au poste de travail, à une distance verticale (d) de ladite extrémité inférieure qui est plus petite qu'une course maximale de déplacement vertical qui est permise audit fourreau cylindrique porte-tube par ladite liaison (31) à deux degrés de liberté et par le ressort souple (33) quand l'aiguille (45) de l'unité de prélèvement et de distribution (8) exerce une force de pénétration verticale, dirigée vers le bas, sur le bouchon (7) du tube à échantillon (6) installé dans ledit fourreau cylindrique porte-tube (24).

10. Appareil selon la revendication 4, **caractérisé en ce que** chaque encoche verticale (32) est formée dans la face supérieure de la branche correspondante (26 ou 27) de la pièce de montage (28) et chaque tourillon (25) repose sur le fond de l'encoche verticale correspondante.

11. Appareil selon la revendication 10, **caractérisé en ce que** le moyen d'appui (44) est constitué par une cale, qui peut être déplacée par un actionneur (113) entre une première position dans laquelle ladite cale n'interfère pas avec les fourreaux cylindriques porte-tube (24) lorsque le plateau circulaire (4) est mis en rotation, et une seconde position dans laquelle ladite cale est en contact avec l'extrémité inférieure du fourreau cylindrique porte-tube amené et positionné au poste de travail et supporte ledit fourreau cylindrique dans une position verticale telle que ses deux tourillons (25) ne reposent plus sur le fond des encoches verticales correspondantes (32) dans les branches (26, 27) de la pièce de montage (28).

12. Appareil selon la revendication 11, **caractérisé en ce que** ladite cale (44) est constituée par une pièce en forme de coin qui peut glisser, sous la commande de l'actionneur (113), sur une surface fixe (11a) de support et de guidage horizontal.

13. Appareil selon la revendication 12, **caractérisé en ce que** chaque pièce de montage (28) comporte un moyen de butée (114) propre à empêcher le fourreau cylindrique porte-tube (24) de pivoter autour de l'axe horizontal défini par les deux tourillons (25) et à maintenir ledit fourreau cylindrique en position verticale quand la cale (44) est déplacée de sa première à sa seconde position par l'actionneur (113) et vient au cours de ce déplacement en contact avec l'extrémité inférieure dudit fourreau cylindrique.

14. Appareil selon l'une quelconque des revendications 1 à 13, **caractérisé en ce que** le plateau circulaire (4) est relié à des moyens d'entraînement (19, 21, 22, 23) aptes à faire tourner ledit plateau circulaire sélectivement à une première vitesse relativement rapide pour soumettre à une centrifugation les échantillons liquides contenus dans les tubes à échantillon (6) portés par le plateau circulaire, et à une seconde vitesse, nettement plus lente que la première vitesse, pour amener et positionner successivement et sélectivement lesdits tubes à échantillon au poste de travail.

15. Appareil selon l'une quelconque des revendications 2 à 14, **caractérisé en ce que** les fourreaux cylindriques porte-tube (24) sont en une matière transparente de manière à permettre une lecture d'un code individuel d'identification (39) porté par une étiquette (38) fixée à chaque tube à échantillon (6) par un lecteur de code (41) installé à poste fixe dans une position angulaire prédéfinie par rapport à l'axe vertical de rotation du plateau circulaire (4).

16. Appareil selon l'une quelconque des revendications 2 à 14, **caractérisé en ce que** chaque fourreau cylindrique porte-tube (24) comporte, dans sa paroi cylindrique, une large fenêtre (42) permettant une lecture d'un code individuel d'identification (39) porté par une étiquette (38) fixée à chaque tube à échantillon (6) par un lecteur de code (41) installé à poste fixe dans une position angulaire prédéfinie par rapport à l'axe vertical de rotation du plateau circulaire (4).

## Claims

1. Apparatus for the analysis of liquid samples that are contained in sample tubes (6) closed by a pierceable stopper (7), comprising a support (4) for supporting the sample tubes in a vertical position, a removal and distribution unit (8) for removing from each sample tube carried by the support a portion of the liquid sample contained in the sample tube and for distributing at least a fraction of the removed portion of liquid sample into at least one receptacle (74) for the purpose of treatment and/or analysis of said distributed fraction, said removal and distribution unit comprising a hollow needle (45) which is connected to an aspiration/delivery means (47) and fixed in a vertical position to a vertically movable needle carrier (48), and a drive means (53, 54, 57, 58, 59, 61) for moving the needle carrier and the needle vertically between a first position, in which the lower end of the needle is located at a level higher than that of the stopper of said sample tube carried by the support, and a second position, in which the lower end of the needle is located within the liquid contained in said sample tube carried by the support, **characterized in that** said support (4) is formed by a circular plate provided with several tube carriers (5) which are disposed at intervals about its periphery and which each comprise a recess of vertical axis for receiving and supporting a sample tube, said circular plate being able to turn about a vertical axis in such a way that the tube carriers (5), successively and selectively, can be brought to and positioned at a workstation where the removal and distribution unit (8) is located, such that the latter can act on the sample tube (6) supported by the tube carrier that has been brought to and positioned at the workstation, **in that** each tube carrier (5) is connected to the circular plate (4) by a connection (31) with two degrees of freedom, namely a freedom of vertical translatory movement and a freedom of movement in rotation about a horizontal axis oriented tangentially with respect to the circular plate, and **in that** at the workstation there is a support means (44) for supporting from below the tube carrier (5) brought to and positioned at the workstation.

2. Apparatus according to Claim 1, **characterized in that** each tube carrier (5) is formed by a cylindrical sleeve (24) which is open at its upper end and closed at its lower end, and which comprises, near its upper end, two aligned journals (25) which define the horizontal axis of the connection (31) with two degrees of freedom.

3. Apparatus according to Claim 2, **characterized in that** the end of each cylindrical sleeve (24) is disposed between two branches (26, 27) of a forkshaped assembly piece (28) which is joined to the circular plate (4) and whose two branches extend radially outwards from said circular plate, the two journals (25) of the cylindrical sleeve (24) being supported respectively by the branches of the assembly piece (28) by means of the connection (31) with two degrees of freedom.

4. Apparatus according to Claim 3, **characterized in that** each branch (26, 27) of the assembly piece (28) comprises a vertical notch (32), in which one of the two journals (25) of the cylindrical sleeve (24) is engaged.

5. Apparatus according to Claim 4, **characterized in that** each of the two journals (25) is resiliently supported in the corresponding vertical notch (32) by a flexible spring (33).

6. Apparatus according to Claim 5, **characterized in that** each vertical notch (32) is formed in the upper face of the corresponding branch (26 or 27) of the assembly piece (28), and the flexible spring (33) is disposed in the vertical notch (32) between the bottom of the latter and the journal (25).

7. Apparatus according to Claim 6, **characterized in that** the assembly piece (28) carries a removable retaining means (34) which, in service, retains the two journals (25) in the corresponding vertical notches (32).

8. Apparatus according to Claim 5, **characterized in that** each vertical notch (32) is formed in the lower face of the corresponding branch (26 or 27) of the assembly piece (28), and the flexible spring (33) is formed by a flexible blade, of which one end is fixed to the lower face of said corresponding branch, and of which the other end resiliently supports and retains the journal (25) in the corresponding vertical notch.

9. Apparatus according to any one of Claims 1 to 8, **characterized in that** the support means (44) is formed by a fixed buffer disposed below the lower end of the cylindrical tube-carrying sleeve (24) brought to and positioned at the workstation, at a vertical distance (d) from said lower end which is smaller than a maximum course of vertical movement afforded to said cylindrical tube-carrying sleeve by said connection (31) with two degrees of freedom and by the flexible spring (33) when the needle (45) of the removal and distribution unit (8) exerts a vertical penetration force, directed downwardly, on the stopper (7) of the sample tube (6) installed in said cylindrical tube-carrying sleeve (24).

10. Apparatus according to Claim 4, **characterized in that** each vertical notch (32) is formed in the upper face of the corresponding branch (26 or 27) of the assembly piece (28), and each journal (25) rests on the bottom of the corresponding vertical notch.

11. Apparatus according to Claim 10, **characterized in that** the support means (44) is formed by a block, which can be moved by an actuator (113) between a first position, in which said block does not interfere with the cylindrical tube-carrying sleeves (24) when the circular plate (4) is rotated, and a second position, in which said block is in contact with the lower end of the cylindrical tube-carrying sleeve brought to and positioned at the workstation and supports said cylindrical sleeve in a vertical position such that the two journals (25) no longer rest on the bottom of the corresponding vertical notches (32) in the branches (26, 27) of the assembly piece (28).

12. Apparatus according to Claim 11, **characterized in that** said block (44) is formed by a wedge-shaped piece which can slide, under the control of the actuator (113), on a fixed surface (11a) providing support and horizontal guidance.

13. Apparatus according to Claim 12, **characterized in that** each assembly piece (28) comprises an abutment means (114) designed to prevent the cylindrical tube-carrying sleeve (24) from pivoting about the horizontal axis defined by the two journals (25) and to maintain said cylindrical sleeve in a vertical position when the block (44) is moved from its first position to its second position by the actuator (113) and comes into contact, during this movement, with the lower end of said cylindrical sleeve.

14. Apparatus according to any one of Claims 1 to 13, **characterized in that** the circular plate (4) is connected to drive means (19, 21, 22, 23) for turning said circular plate selectively at a first, relatively high speed, so as to centrifuge the liquid samples contained in the sample tubes (6) carried by the circular plate, and at a second speed substantially lower than the first speed, so as to allow said sample tubes, successively and selectively, to be brought to and positioned at the workstation.

15. Apparatus according to any one of Claims 2 to 14, **characterized in that** the cylindrical tube-carrying sleeves (24) are made of a transparent material, such that an individual identification code (39), carried by a label (38) fixed to each sample tube (6), can be read by a code reader (41) which is installed, stationary, in a predefined angular position with respect to the vertical axis of rotation of the circular plate (4).

16. Apparatus according to any one of Claims 2 to 14, **characterized in that** each cylindrical tube-carrying sleeve (24) comprises a wide window (42) in its cylindrical wall, such that an individual identification code (39), carried by a label (38) fixed to each sample tube (6), can be read by a code reader (41) which is installed, stationary, in a predefined angular position with respect to the vertical axis of rotation of the circular plate (4).

## Patentansprüche

1. Vorrichtung zur Analyse von flüssigen Proben, die in durch einen durchstechbaren Stopfen (7) verschlossenen Probenröhrchen (6) abgepackt sind, mit einer zum Stützen der Probenröhrchen in vertikaler Position geeigneten Stütze (4), einer Entnahme- und Verteileinheit (8), um aus jedem von der Stütze getragenen Probenröhrchen einen Teil der im Probenröhrchen enthaltenen flüssigen Probe zu entnehmen und mindestens einen Bruchteil des entnommenen Teils der flüssigen Probe in mindestens ein Behältnis (74) zu verteilen, um den verteilten Bruchteil zu bearbeiten und/oder zu analysieren, wobei die Entnahme- und Verteileinheit eine Hohlnadel (45) umfasst, die mit einem Ansaug-/Fördermittel (47) verbunden und in vertikaler Position an einem vertikal beweglichen Nadelträger (48) befestigt ist, und einem Antriebsmittel (53, 54, 57, 58, 59, 61), um den Nadelträger und die Nadel zwischen einer ersten Position, in der sich das untere Ende der Nadel weiter oben als der Stopfen des von der Stütze getragenen Probenröhrchens befindet, und einer zweiten Position, in der sich das untere Ende der Nadel in der Flüssigkeit befindet, die in dem von der Stütze getragenen Probenröhrchen enthalten ist, zu verschieben, **dadurch gekennzeichnet, dass** die Stütze (4) aus einem mit mehreren Röhrchenträgern (5) versehenen kreisförmigen Teller besteht, die in regelmäßigen Abständen am Umfang angeordnet sind und jeweils ein Lager mit vertikaler Achse umfassen, um ein Probenröhrchen aufzunehmen und zu stützen,
wobei sich der kreisförmige Teller um eine vertikale Achse drehen kann, um die Röhrchenträger (5) nacheinander und gezielt zu einer Arbeitsstation, an der sich eine Entnahme-und Verteileinheit (8) befindet, zu führen und dort zu positionieren, so dass diese auf das von dem zur Arbeitsstation geführten und dort positionierten Röhrchenträger (5) gestützte Probenröhrchen (6) einwirken kann, dass jeder Röhrchenträger (5) über eine Verbindung (31) mit zwei Freiheitsgraden, d. h. einer vertikalen Translationsbewegungsfreiheit und einer Drehbewegungsfreiheit um eine horizontale Achse, die tangential bezüglich des kreisförmigen Tellers ausgerichtet ist, mit dem kreisförmigen Teller (4) verbunden ist und dass an der Arbeitsstation ein Stützmittel (44) angeordnet ist, das geeignet ist, den zur Arbeitsstation geführten und dort positionierten Röhrchenträger (5) von unten zu stützen.

2. Vorrichtung nach Anspruch 1, **dadurch gekennzeichnet, dass** jeder Röhrchenträger (5) aus einer zylindrischen Scheide (24) besteht, die an ihrem oberen Ende offen und an ihrem unteren Ende geschlossen ist und die in der Nähe ihres oberen Endes zwei ausgerichtete Lagerzapfen (25) umfasst, die die horizontale Achse der Verbindung (31) mit zwei Freiheitsgraden definieren.

3. Vorrichtung nach Anspruch 2, **dadurch gekennzeichnet, dass** das Ende jeder zylindrischen Scheide (24) zwischen zwei Armen (26, 27) eines gabelförmigen Montageteils (28) angeordnet ist, der fest mit dem kreisförmigen Teller (4) verbunden ist und dessen beide Arme sich radial zur Außenseite des kreisförmigen Tellers erstrecken, wobei die beiden Lagerzapfen (25) der zylindrischen Scheide (24) jeweils von den Armen des Montageteils (28) mittels der Verbindung (31) mit zwei Freiheitsgraden gestützt werden.

4. Vorrichtung nach Anspruch 3, **dadurch gekennzeichnet, dass** jeder Arm (26, 27) des Montageteils (28) eine vertikale Auskerbung (32) umfasst, in der der eine der beiden Lagerzapfen (25) der zylindrischen Scheide (24) in Eingriff genommen ist.

5. Vorrichtung nach Anspruch 4, **dadurch gekennzeichnet, dass** jeder der beiden Lagerzapfen (25) durch eine flexible Feder (33) elastisch in der entsprechenden vertikalen Auskerbung (32) gestützt wird.

6. Vorrichtung nach Anspruch 5, **dadurch gekennzeichnet, dass** jede vertikale Auskerbung (32) in der oberen Fläche des entsprechenden Arms (26 oder 27) des Montageteils (28) ausgebildet ist und die flexible Feder (33) in der vertikalen Auskerbung (32) zwischen deren Boden und dem Lagerzapfen (25) angeordnet ist.

7. Vorrichtung nach Anspruch 6, **dadurch gekennzeichnet, dass** der Montageteil (28) ein entfernbares Haltemittel (34) trägt, das im Gebrauch die beiden Lagerzapfen (25) in den entsprechenden vertikalen Auskerbungen (32) hält.

8. Vorrichtung nach Anspruch 5, **dadurch gekennzeichnet, dass** jede vertikale Auskerbung (32) in der unteren Fläche des entsprechenden Arms (26 oder 27) des Montageteils (28) ausgebildet ist und die flexible Feder (33) aus einem flexiblen Blatt besteht, dessen eines Ende an der unteren Fläche des entsprechenden Arms befestigt ist und dessen anderes Ende den Lagerzapfen (25) in der entsprechenden vertikalen Auskerbung elastisch stützt und hält.

9. Vorrichtung nach einem der Ansprüche 1 bis 8, **dadurch gekennzeichnet, dass** das Stützmittel (44) aus einem feststehenden Anschlag besteht, der unter dem unteren Ende der zur Arbeitsstation geführten und dort positionierten zylindrischen Röhrchenträgerscheide (24) angeordnet ist, wobei der vertikale Abstand (d) des unteren Endes dabei kleiner ist als ein maximaler vertikaler Verschiebungsweg, den die Verbindung (31) mit zwei Freiheitsgraden und die flexible Feder (33) der zylindrischen Röhrchenträgerscheide gestatten, wenn die Nadel (45) der Entnahme- und Verteileinheit (8) eine nach unten gerichtete vertikale Durchstechkraft auf den Stopfen (7) des in der zylindrischen Röhrchenträgerscheide (24) installierten Probenröhrchens (6) ausübt.

10. Vorrichtung nach Anspruch 4, **dadurch gekennzeichnet, dass** jede vertikale Auskerbung (32) in der oberen Fläche des entsprechenden Arms (26 oder 27) des Montageteils (28) ausgebildet ist und jeder Lagerzapfen (25) auf dem Boden der entsprechenden vertikalen Auskerbung ruht.

11. Vorrichtung nach Anspruch 10, **dadurch gekennzeichnet, dass** das Stützmittel (44) aus einem Unterlegklotz besteht, der von einem Stellglied (113) zwischen einer ersten Position, in der der Unterlegklotz nicht auf die zylindrischen Röhrchenträgerscheiden (24) einwirkt, wenn der kreisförmige Teller (4) in Drehung versetzt wird, und einer zweiten Position, in der der Unterlegklotz mit dem unteren Ende der zur Arbeitsstation geführten und dort positionierten zylindrischen Röhrchenträgerscheide in Kontakt steht und die zylindrische Scheide in einer vertikalen Position stützt, so dass die beiden Lagerzapfen (25) nicht mehr auf dem Boden der entsprechenden vertikalen Auskerbungen (32) in den Armen (26, 27) des Montageteils (28) ruhen, verschoben werden kann.

12. Vorrichtung nach Anspruch 11, **dadurch gekennzeichnet, dass** der Unterlegklotz (44) aus einem keilförmigen Teil besteht, das gesteuert durch das Stellglied (113) auf einer feststehenden Fläche (11a) zur Stützung und horizontalen Führung gleiten kann.

13. Vorrichtung nach Anspruch 2, **dadurch gekennzeichnet, dass** jeder Montageteil (28) ein Anschlagmittel (114) umfasst, das geeignet ist, das Schwenken der zylindrischen Röhrchenträgerscheide (24) um die durch die beiden Lagerzapfen (25) definierte horizontale Achse zu verhindern und die zylindrische Scheide in einer vertikalen Position zu halten, wenn der Unterlegklotz (44) durch das Stellglied (113) aus seiner ersten in seine zweite Position verschoben wird und bei seiner Verschiebung mit dem unteren Ende der zylindrischen Scheide in Kontakt kommt.

14. Vorrichtung nach einem der Ansprüche 1 bis 13, **dadurch gekennzeichnet, dass** der kreisförmige Teller (4) mit Antriebsmitteln (19, 21, 22, 23) verbunden ist, die geeignet sind, den kreisförmigen Teller gezielt mit einer relativ hohen ersten Geschwindigkeit zu drehen, um die in den Probenröhrchen (6), die von dem kreisförmigen Teller getragen werden, enthaltenen flüssigen Proben einer Zentrifugation zu unterziehen, sowie mit einer zweiten Geschwindigkeit, die deutlich langsamer als die erste Geschwindigkeit ist, um die Probenröhrchen nacheinander und gezielt an die Arbeitsstation zu führen und dort zu positionieren.

15. Vorrichtung nach einem der Ansprüche 2 bis 14, **dadurch gekennzeichnet, dass** die zylindrischen Röhrchenträgerscheiden (24) aus einem transparenten Material bestehen, so dass eine an feststehender Stelle in einer in Bezug auf die vertikale Drehachse des kreisförmigen Tellers (4) vordefinierten Winkelposition installierte Kodelesevorrichtung (41) einen individuellen Identifikationskode (39) auf einem an jedem Probenröhrchen (6) befestigten Etikett (38) lesen kann.

16. Vorrichtung nach einem der Ansprüche 2 bis 14, **dadurch gekennzeichnet, dass** jede zylindrische Röhrchenträgerscheide (24) in ihrer zylindrischen Wand ein breites Fenster (42) umfasst, das ein Lesen eines individuellen Identifikationskodes (39) auf einem an jedem Probenröhrchen (6) befestigten Etikett (38) durch eine an feststehender Stelle in einer in Bezug auf die vertikale Drehachse des kreisförmigen Tellers (4) vordefinierten Winkelposition installierte Kodelesevorrichtung (41) gestattet.
